(19) Europäisches Patentamt
European Patent Office
Office européen des brevets

(11) **EP 1 133 126 B1**

(12) **EUROPÄISCHE PATENTSCHRIFT**

(45) Veröffentlichungstag und Bekanntmachung des Hinweises auf die Patenterteilung:
**14.11.2007 Patentblatt 2007/46**

(51) Int Cl.:
*H04L 27/36* (2006.01)   *H03C 3/40* (2006.01)

(21) Anmeldenummer: **01200785.2**

(22) Anmeldetag: **05.03.2001**

(54) **Beseitigung von Störkomponenten bei Quadraturmodulation**

Removal of distortion in quadrature modulation

Elimination de distorsions dans la modulation en quadrature

(84) Benannte Vertragsstaaten:
**DE FR GB**

(30) Priorität: **11.03.2000 DE 10012003**

(43) Veröffentlichungstag der Anmeldung:
**12.09.2001 Patentblatt 2001/37**

(73) Patentinhaber: **NXP B.V.**
**5656 AG Eindhoven (NL)**

(72) Erfinder: **Birth, Winfrid,**
**c/o Philips Corp. Int. Prop. GmbH**
**52064 Aachen (DE)**

(74) Vertreter: **Pennings, Johannes et al**
**NXP Semiconductors**
**Intellectual Property Department**
**High Tech Campus 60**
**5656 AG Eindhoven (NL)**

(56) Entgegenhaltungen:
**EP-A- 0 305 164         US-A- 5 861 781**

**Beschreibung**

Die Erfindung betrifft einen Sender und ein Verfahren zum Erzeugen eines Sendesignals mit einer Modulationseinrichtung zum Erzeugen von mindestens zwei unkompensierten Sendesignalen jeweils durch Modulieren von einem Basisbandsignal mit einem Oszillationssignal, wobei jedes der beiden unkompensierten Sendesignale mindestens ein Störanteil aufweist und die Störanteile in den beiden unkompensierten Sendesignalen um einen bestimmten Betrag gegeneinander phasenverschoben sind.

Aus dem Stand der Technik ist es allgemein bekannt, Sendesignale durch Verwendung von Quadraturmodulatoren bereitzustellen.

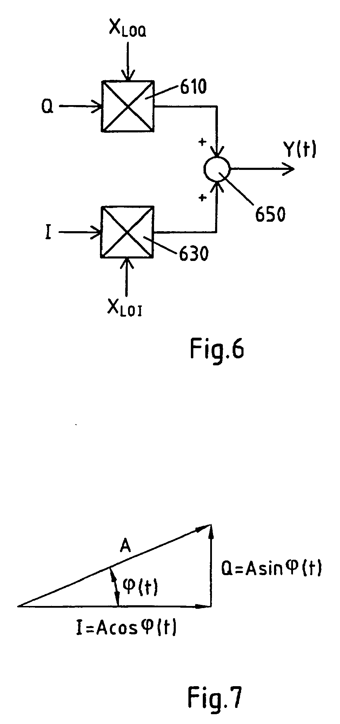

Ein erstes Ausführungsbeispiel eines bekannten Quadraturmodulators ist in Fig. 6 gezeigt. Der Quadraturmodulator umfasst zwei Modulatoren 610, 630, welche jeweils ein Basisbandsignal I, Q mit einem zugehörigen Oszillationssignal $X_{L0Q}$, $X_{L0I}$ multiplizieren. Die Ausgangssignale der beiden Modulatoren 610, 630 sind einer Additionseinrichtung 650 zugeführt, welche die Ausgangssignale der Modulatoren additiv verknüpft und an ihrem Ausgang ein unkompensiertes Sendesignal Y(t) bereitstellt.

Das Sendesignal Y ist insofern unkompensiert, als dass es insbesondere bei Verwendung von binären Oszillationssignalen $X_{L0Q}$, $X_{L0I}$ Störanteile aufweist, die im Spektrum des Sendesignals unerwünscht sind. Das Entstehen dieser Störkomponenten in dem im Rahmen der Erzeugung des unkompensierten Sendesignals durch die Quadraturmodulator wird nachfolgend mathematisch hergeleitet:

Wie aus Fig. 7 ersichtlich, können die Basisbandsignale I, Q als karthesische Komponenten eines rotierenden Zeigers A interpretiert werden. Für den Spezialfall, dass $\varphi(t) = \omega_m \cdot t$ ergeben sich für die Basisbandsignale I und Q die folgenden mathematischen Ausdrücke:

$$I = A \cos \varphi = A \cos(\omega_m t) \tag{1}$$

$$Q = A \sin \varphi = A \sin(\omega_m t) \tag{2}$$

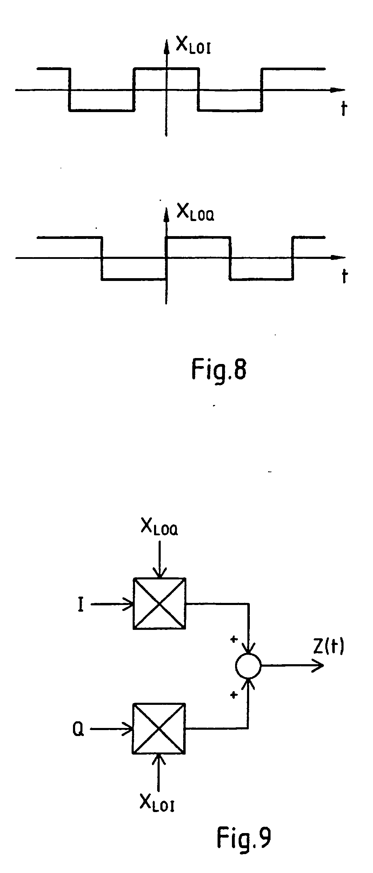

Als Oszillationssignale $X_{L0I}$ und $X_{L0Q}$ werden typischerweise jeweils binäre Signale verwendet, die gemäß Fig. 8 um 90° zueinander phasenverschoben sind. Die Anwendung der Fouriertransformation auf diese Signale führt zu folgender Reihendarstellung:

$$X_{L0I} = \cos\omega_c t - \frac{1}{3}\cos 3\omega_c t + \frac{1}{5}\cos 5\omega_c t - \frac{1}{7}\cos 7\omega_c t \ldots \tag{3}$$

$$X_{L0Q} = \sin\omega_c t + \frac{1}{3}\sin 3\omega_c t + \frac{1}{5}\sin 5\omega_c t + \frac{1}{7}\sin 7\omega_c t \ldots \tag{4}$$

Die oben beschriebene Verknüpfung der Basisbandsignale I, Q mit den Oszillationssignalen $X_{L0Q}$, $X_{L0I}$ in dem Quadraturmodulator führt zu folgender Darstellung für das erste unkompensierte Sendesignal Y:

$$Y(t) = X_{L0I} \cdot \cos\omega_m t \left(\overset{+}{-}\right) X_{L0Q} \cdot \sin\omega_m t \quad \text{für } A = 1 \tag{5a}$$

Das Einsetzen der Fourierreihendarstellung für die Oszillationssignale $X_{L0I}$ und $X_{L0Q}$ und ein anschließendes Ausmultiplizieren führt zu folgender Reihendarstellung für das erste unkompensierte Sendesignal:

$$Y(t) = \cos(\omega_c \underset{(+)}{-} \omega_m)t-$$

$$\frac{1}{3}\cos(3\omega_c(\overset{+}{-})\omega_m)t+\frac{1}{5}\cos(5\omega_c\underset{(+)}{-}\omega_m)t-\frac{1}{7}\cos(7\omega_c(\overset{+}{-})\omega_m)t... \qquad (5b)$$

In dieser Darstellung repräsentiert die Grundwelle, d.h. der Summand $\cos(\omega_c{-}/{+}\omega_m)t$ den erwünschten Anteil im Sendesignal Y(t) und alle anderen Anteile repräsentieren unerwünschte Störanteile in dem Sendesignal Y(t).
In den Gleichungen 3 bis 5 bezeichnet $\omega_c$ die Trägerfrequenz und $\omega_m$ die Modulationsfrequenz.
Ein alternatives Ausführungsbeispiel für den zuvor beschriebenen Quadraturmodulator zeigt Fig. 9. Der Hardware-Aufbau dieses alternativen bekannten Quadraturmodulators ist identisch mit dem Hardware-Aufbau des Quadraturmodulators gemäß Fig. 6. Der einzige Unterschied zwischen beiden Quadraturmodulatoren besteht in ihrer Ansteuerung insofern, als das bei dem alternativen Quadraturmodulator das Basisbandsignal I nicht mit dem Oszillationssignal $X_{L0I}$, sondern mit dem Oszillationssignal $X_{L0Q}$ multipliziert wird. Analog wird das Basisbandsignal Q nicht mit dem Oszillationssignal $X_{L0Q}$, sondern mit dem Oszillationssignal $X_{L0I}$ multipliziert.
Bei Verwendung der in den Gleichungen 1 bis 4 beschriebenen Signale ergibt sich am Ausgang des alternativen Quadraturmodulators gemäß Fig. 9 ein zweites unkompensiertes Sendesignal Z(t), welches sich mathematisch wie folgt darstellen lässt:

$$Z(t) = X_{L0I} \cdot \sin\omega_m t(\overset{+}{-}) \; X_{L0Q} \cdot \cos\omega_m t \quad \text{fur} \quad A = 1 \qquad (6a)$$

$$Z(t) = -\sin(\omega_c \underset{(+)}{-} \omega_m)t$$

$$-\frac{1}{3}\sin(3\omega_c(\overset{+}{-})\omega_m)t-\frac{1}{5}\sin(5\omega_c\underset{(+)}{-}\omega_m)t-\frac{1}{7}\sin(7\omega_c(\overset{+}{-})\omega_m)t... \qquad (6b)$$

Für die Herleitung der Gleichungen 5 und 6 wurden folgende Additonstheoreme verwendet:

$$\cos\alpha \; \cos\beta= \frac{1}{2}[\cos(\alpha - \beta) + \cos(\alpha + \beta)]$$

$$(7a)$$

$$\sin\alpha \; \sin\beta= \frac{1}{2}[\cos(\alpha - \beta) - \cos(\alpha + \beta)]$$

$$(7b)$$

$$\sin\alpha \; \cos\beta= \frac{1}{2}[\sin(\alpha - \beta) + \sin(\alpha + \beta)]$$

$$(7c)$$

Eine Kombination der beiden beschriebenen Quadraturmodulatoren zur Erzeugung des ersten und zweiten Sendesignals Y, Z ist z.B. aus der japanischen Druckschrift P 6-120990 A bekannt.

Wie aus der Fourierreihendarstellung für die unkompensierten Sendesignale Y und Z ersichtlich, enthalten diese neben der Grundwelle, dargestellt durch $\cos(\omega_c/+\omega_m) \cdot t$ oder $-\sin(\omega_c-/+\omega_m) \cdot t$ jeweils eine Vielzahl von Oberwellen, dargestellt durch die höherfrequenten Schwingungsanteile, die jeweils einen unerwünschten Anteil im geforderten Sendemodulationsspektrum repräsentieren. Die beschriebenen Oberwellen in dem unkompensierten Sendesignal am Ausgang eines Quadraturmodulators sind deswegen unerwünscht, weil sie bei Eingabe auf eine dem Quadraturmodulator nachgeschaltete nichtlineare Verstärkerstufe neue Mischprodukte erzeugen würden, deren Frequenz in der Nähe der Grundfrequenz des gesendeten Signals liegen würde; dadurch würde das geforderte Sendemodulationsspektrum gestört.

Herkömmlich werden die Oberwellen in dem unkompensierten Sendesignal am Ausgang eines Quadraturmodulators durch einen nachgeschalteten Tiefpassfilter herausgefiltert. Der Aufbau dieses Tiefpassfilters ist jedoch relativ aufwendig, weil in den Sendern zusätzlich ein hoher Signal-/Rauschabstand gefordert wird. Eine Integration von Quadraturmodulator und nachgeschaltetem Tiefpassfilter zusammen auf einem Chip ist deshalb bisher nicht realisierbar. Ein Beispiel für einen integrierten Quadraturmodulator ist der Philips Baustein 0M5175, dem ein Tiefpass extern nachgeschaltet werden muss.

Eine denkbare Lösung zur Eliminierung der Oberwellenanteile in dem Sendesignal wäre die, dass man im Quadraturmodulator nur ideale Multiplizierer verwendet und die Oszillatorsignale $X_{L0I}$ und $X_{L0Q}$ so vorfiltert, dass sie lediglich ihre Grundwellen, d. h. $\cos(\omega_c t)$ oder $\sin(\omega_c t)$, aufweisen (vgl. Gleichungen 3 und 4). Ein derartiger Lösungsansatz soll jedoch nicht Gegenstand der vorliegenden Erfindung sein, weil ein derartiger Ansatz das Filterproblem nur an andere Stellen verlagert und zudem eine Forderung nach idealen Multiplizierern schafft.

EP 0 305 164 zeigt einen Vektormodulationssignal-Generator. Der Vektormodulator weist eine Baseband-Modulationsschaltung auf, wobei das Ausgangssignal des Vektormodulators auf eine gewünschte Ausgangsfrequenz moduliert wird. In der Baseband-Modulationsschaltung wird die Phase der I und Q-Signale eingestellt.

US 5,861,781 zeigt ein Verfahren einer Seitenbandmodulation, wobei die Q und 1-Komponenten des Basisbandes vermischt und summiert werden, so dass die I und die Q-Komponenten des Summensignals eine Frequenz aufweisen, welche der Summe der Frequenzen des Basisbandes und der Zwischenfrequenzen entspricht.

Ausgehend vom dem beschriebenen Stand der Technik ist es die Aufgabe der vorliegenden Erfindung, einen Sender und ein Verfahren zum Erzeugen eines Sendesignals der eingangs genannten Art derart weiterzubilden, dass der Aufwand für eine nachträgliche Filterung der Sendesignale reduziert wird.

Diese Aufgabe wird zum einen durch den Gegenstand des Patentanspruchs 1 gelöst.

Im Patentanspruch 1 bezeichnet das andere der beiden unkompensierten Sendesignale jenes, welches nicht durch den Allpass einer Phasendrehung unterzogen wird.

Durch die in Patentanspruch 1 beanspruchte Teilkompensation werden zumindest einzelne unerwünschte Störanteile in dem am Ausgang der Verknüpfungseinrichtung anstehenden Sendesignal kompensiert, d.h. zumindest weitgehend eliminiert. Für die kompensierten Störanteile ist eine nachträgliche Filterung i.d.R. entbehrlich.

Das Sendesignal am Ausgang der Verknüpfungseinrichtung kann jedoch trotz der Kompensation noch weitere unerwünschte Störanteile aufweisen, welche durch die Kompensation nicht eliminiert wurden; es wird deshalb als zumindest teilkompensiertes Sendesignal bezeichnet.

Aufgrund der beschriebenen zumindest teilweisen Kompensation von Störanteilen ist der Aufwand für eine nachträgliche Tiefpassfilterung des zumindest teilkompensierten Sendesignals, bei welchem eine möglichst weitgehende Eliminierung aller Störanteile angestrebt wird, sehr stark vereinfacht. Vorteilhafterweise ist aufgrund der Vereinfachung eine Integration des für die nachträgliche Tiefpassfilterung erforderlichen Tiefpassfilters zusammen mit dem Sender, umfassend die Modulationseinrichtung, den Allpass und die Verknüpfungseinrichtung, auf einem Chip realisierbar.

Gemäß einem ersten Ausführungsbeispiel handelt es sich bei dem einen Störanteil der in dem erfindungsgemäßen Sender kompensiert wird, vorteilhafterweise um die dritte Oberwelle in den unkompensierten Sendesignalen. Dies ist besonders vorteilhaft, weil die Frequenz der dritten Oberwelle nahe an der Grundfrequenz des Sendesignals liegt. Eine Kompensation der dritten Oberwelle ermöglicht einen wesentlich einfacheren Aufbau des der Verknüpfungseinrichtung nachgeschalteten Tiefpassfilters.

Bei Verwendung von nur einem Allpass zur Phasendrehung des Störanteils in nur einem der beiden unkompensierten Sendesignal ist es vorteilhaft, dass andere, nicht-phasengedrehte unkompensierte Sendesignal tiefpass zu filtern, bevor es der Verknüpfungseinrichtung zugeführt wird. Das Tiefpassfilter bewirkt eine Korrektur der Phase und des Verstärkungsfaktors des Störanteils in dem anderen unkompensierten Sendesignal, zum Ausgleich von durch Toleranzen in der Hardware des Allpasses bedingten Schwankungen des Verstärkungsfaktors und der Phase des Ausgangssignals des Allpasses. Durch die Anpassung wird gewährleistet, dass sich die Störanteile in den beiden Sendesignalen nach ihrer Überlagerung möglichst gut kompensieren.

Alternativ zu dem Tiefpass kann dem zweiten unkompensierten Sendesignal auch ein zweiter Allpass nachgeschaltet werden, welcher vorteilhafterweise zur Kompensation derjenigen Toleranzen dient, die von dem ersten Allpass verursacht werden. Auch der zweite Allpass dient dazu, eine möglichst gute Kompensation am Ausgang der mathematischen Verknüpfungseinrichtung zu erzielen.

Es ist vorteilhaft, wenn der Sender weiterhin ein nachgeschaltetes Tiefpassfilter zum Filtern des zumindest teilweise kompensierten Sendesignals aufweist, um diejenigen Störanteile, die nicht Gegenstand der Kompensation waren, aus dem Sendesignal herauszufiltern.

Es ist von Vorteil, dass der Sender zusammen mit dem Tiefpassfilter zum Filtern des zumindest teilweise kompensierten Sendesignals auf einem Chip integrierbar ist. Die Integration ist aufgrund der zumindest teilweisen Kompensation auch unter Einhaltung von notwendigen Vorgaben für ein gefordertes Signal / Rauschleistungsverhältnis möglich.

Das erste und zweite unkompensierte Sendesignal lassen sich jeweils besonders einfach durch eine Addition der Ausgangssignale von jeweils zwei Quadraturmodulatoren erzeugen.

Die Aufgabe wird weiterhin durch den Gegenstand des unabhängigen Verfahrensanspruchs 9 gelöst.

Die Vorteile des dort beanspruchten Verfahrens entsprechen den oben für den Sender mit seinen verschiedenen Ausführungsbeispielen genannten Vorteilen.

Der Erfindung sind die Fig. 1 bis 9 beigefügt, wobei

Fig. 1a    einen Sender mit nachgeschaltem Tiefpassfilter gemäß einem ersten Ausführungsbeispiel der Erfindung,

Fig. 1b    den Aufbau einer Modulationseinrichtung des Senders gemäß Fig. 1a,

Fig. 2    eine Ortskurve für einen ersten Allpass gemäß dem ersten Ausführungsbeispiel der vorliegenden Erfindung,

Fig. 3a    einen Sender gemäß einem zweiten Ausführungsbeispiel der Erfindung,

Fig. 3b    eine Ortskurve für einen zweiten Allpass gemäß dem zweiten Ausführungsbeispiel der Erfindung,

Fig. 4    eine Zeigerdarstellung für ein zumindest teilkompensiertes Sendesignal gemäß dem zweiten Ausführungsbeispiel der Erfindung,

Fig. 5a    ein Beispiel für den bekannten Aufbau eines Allpasses erster Ordnung,

Fig. 5b    die Integration von Allpässen gemäß Fig. 5a in dem Sender gemäß Fig. 3a,

Fig. 6    ein erstes Beispiel für einen Quadraturmodulator gemäß dem Stand der Technik,

Fig. 7    eine Zeigerdarstellung für die Basisbandsignale I und Q,

Fig. 8    eine Darstellung der Oszillationssignale $X_{L0I}$, $Y_{L0Q}$, und

Fig. 9    ein zweites Beispiel für einen Quadraturmodulator gemäß dem Stand der Technik

darstellen.

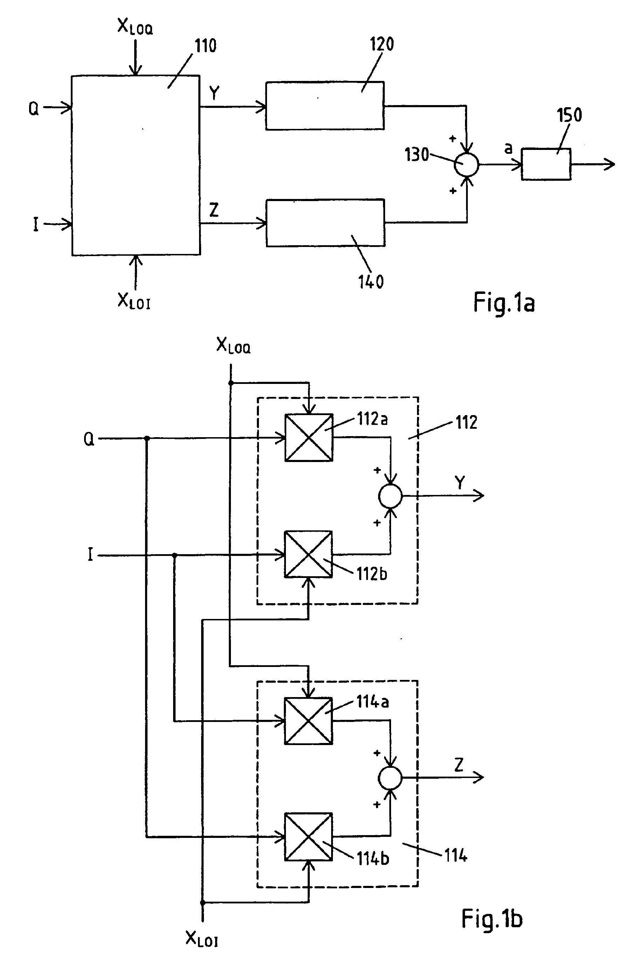

Es folgt eine detaillierte Beschreibung bevorzugter Ausführungsbeispiele der Erfindung unter Bezugnahme auf die Fig. 1 bis 5.

Fig. 1a zeigt ein erstes Ausführungsbeispiel für einen Sender gemäß der vorliegenden Erfindung. Der Sender weist eine Modulationseinrichtung 110 zum Erzeugen von zwei unkompensierten Sendesignalen Y(t), Z(t) auf.

Die unkompensierten Sendesignale Y, Z werden in der Modulationseinrichtung 110 gemäß Fig. 1b jeweils als Ausgangssignale eines ersten und zweiten Quadraturmodulators 112, 114 gebildet, deren jeweilige Funktionsweise oben unter Bezugnahme auf Fig. 9 beschrieben wurde. Die unkompensierten Sendesignale Y, Z sind zueinander jeweils um einen bestimmten Betrag, im ersten Ausführungsbeispiel gemäß Fig. 1a um 90°, phasenverschoben.

Für eine wirkungsvolle Kompensation von unerwünschten Störanteilen in den Signalen Y, Z ist es erforderlich, nur die Störanteile in den Sendesignalen um weitere 90° gegeneinander in ihrer Phase zu verschieben, so dass sie danach insgesamt eine Phasendifferenz von 0° oder 180° aufweisen. Dabei ist es wichtig, dass die Nutzanteile, d.h. insbesondere die Grundwellen in den Signalen Y, Z, möglichst nicht, zumindest jedoch nicht entsprechend stark in ihrer Phase gedreht werden, damit sie nicht auch durch die später erfolgende Kompensation eliminiert werden.

Zum Zweck der Kompensation der Störanteile wird gem. Fig. 1a das unkompensierte Sendesignal Y einem ersten Allpass 120 zugeführt, welcher nur die Phase von mindestens einem von ggf. mehreren vorhandenen Störanteilen, nicht aber von dem Nutzanteil in dem einen unkompensierten Sendesignal Y um die geforderten 90° weiterdreht.

In Abwandlung des Beispiels gem. Fig. 1a wäre es auch möglich, anstelle des Signals Y, nur das Signal Z dem Allpass 120 zuführen. Weiterhin wäre es auch möglich, beide Signale Y und Z jeweils einem Allpass zuzuführen. In jedem Fall muss jedoch erreicht werden, dass nach einer Bearbeitung der Signale Y und/oder Z zumindest ein Teil ihrer jeweiligen Störanteile eine Phasendifferenz von 0° oder 180° zueinander aufweist.

Das Ausgangssignal des ersten Allpasses wird in einer Verknüpfungseinrichtung 130 mit dem anderen unkompensierten Sendesignal, welches nicht durch den Allpass in seiner Phase gedreht wurde, mathematisch verknüpft, nachdem das andere unkompensierte Sendesignal zuvor durch einen ersten Tiefpass 140 tiefpassgefiltert wurde.

Der erste Tiefpass 140 bewirkt eine Anpassung der Phase desjenigen Störanteils in dem anderen unkompensierten Sendesignal Z, dessen Entsprechung, d.h. bei beiden Störanteilen handelt es sich zum Beispiel um die gleiche 3. Oberwelle, in dem unkompensierten Sendesignal Y durch den ersten Allpass 120 phasengedreht wird, so, dass die Phasendifferenz zwischen beiden Störanteilen genau 0° oder 180° beträgt; anders ausgedrückt gleicht der Tiefpass Ungenauigkeiten aus, die bei der Phasendrehung des Störanteils im Ausgangssignal des ersten Allpasses aufgrund von Bauelementtoleranzen im Allpass aufgetreten sind. Weiterhin bewirkt der erste Tiefpass 140 eine Korrektur des Verstärkungsfaktors des anderen unkompensierten Sendesignals Z in der Weise, dass die Verstärkung seines Störanteils, entsprechend dem Verstärkungsfaktor des entsprechenden Störanteils am Ausgang des Allpasses, auf 1 normiert wird.

Wenn die Phasendifferenz der betrachteten Störanteile am Ausgang des ersten Allpasses 120 und am Ausgang des ersten Tiefpasses 140 um 0° gegeneinander phasenverschoben und auf einen gleichen Verstärkungsfaktor normiert worden sind, so wirkt die Verknüpfungseinrichtung 130 als Subtraktionseinrichtung. In einem anderen Fall, wenn die Phasendifferenz zwischen beiden Störanteilen 180° beträgt, wirkt die Einrichtung 130 als Additionseinrichtung. In beiden Fällen erzeugt sie an ihrem Ausgang das zumindest teilweise kompensierte Sendesignal, in welchem insbesondere der durch den ersten Allpass 120 gedrehte Störanteil nicht mehr vorhanden ist. Der Verknüpfungseinrichtung 130 ist ein zweites Tiefpassfilter 150 nachgeschaltet, welches die Aufgabe hat, noch in dem zumindest teilweise kompensierten Sendesignal enthaltene weitere Störanteile, die durch die Kompensation nicht eliminiert wurden, herauszufiltern.

Vorzugsweise wird der erste Allpass 120 so ausgebildet, dass er solche Störanteile unkompensierten Sendesignal Y phasendreht, und damit einer Kompensation zugänglich macht, deren Eliminierung durch eine reine nachgeschaltete Tiefpassfilterung nur sehr schwierig zu realisieren ist. Dies gilt insbesondere für Störanteile, deren Frequenz nahe der Frequenz der gewünschten Grundwelle des Sendesignals liegt. Dies wiederum gilt bei Verwendung von binären Oszillationssignalen insbesondere für die dritte Oberwelle des unkompensierten Sendesignals Y. Wenn die dritte Oberwelle durch Kompensation aus dem zumindest teilkompensierten Sendesignal am Ausgang der Verknüpfungseinrichtung eliminiert wurde, ist damit bereits der größte und am schwierigsten zu entfernende Störanteil in dem Sendesignal eliminiert. Die nach der Kompensation noch in dem Sendesignal am Ausgang der Verknüpfungseinrichtung enthaltenen Störanteile können nachfolgend durch den einfach aufgebauten zweiten Tiefpass leicht entfernt werden. Der Aufbau des zweiten Tiefpasses ist dann so einfach, dass er auch für eine Integration zusammen mit dem Sender auf einem Chip geeignet ist.

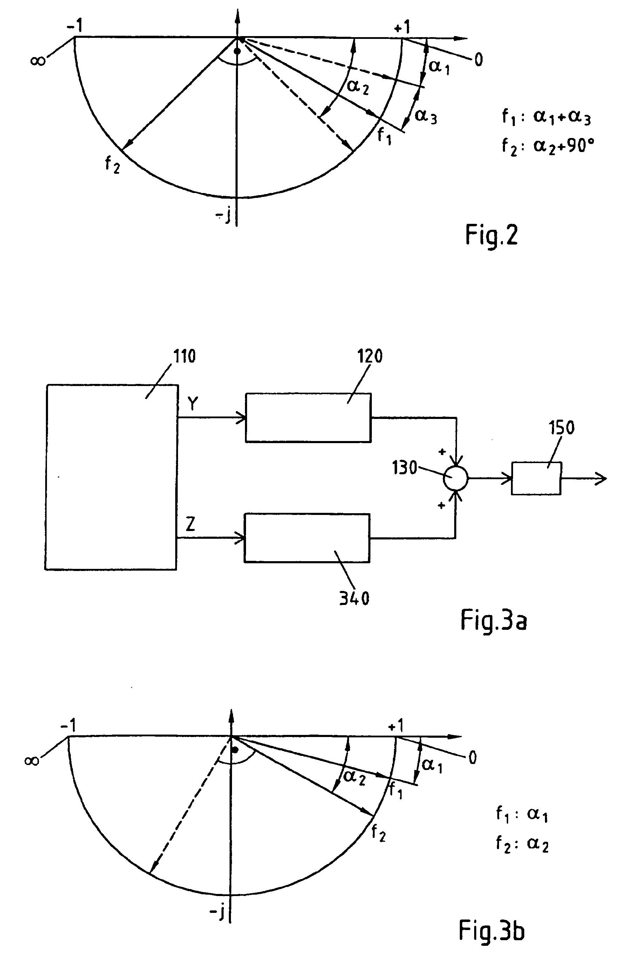

Fig. 2 zeigt eine Ortskurve für den ersten Allpass 120 gemäß dem beschriebenen ersten Ausführungsbeispiel der Erfindung und gemäß einem nachfolgend noch zu beschreibenden zweiten Ausführungsbeispiel der Erfindung.

In der Darstellung der Ortskurve sind die Phasenlagen der Grundwelle und der dritten Oberwelle des unkompensierten Sendesignals Y am Eingang des ersten Allpasses 120 jeweils durch die gestrichelten Pfeile mit den Winkeln $\alpha_1$ und $\alpha_2$ dargestellt. Weiterhin sind die Phasenlagen der Grundwelle und der dritten Oberwelle am Ausgang des ersten Allpasses durch die Zeiger $f_1$ und $f_2$ mit durchgezogenen Linien gekennzeichnet.

Die Hauptaufgabe des ersten Allpasses 120 besteht darin, die Phase der besonders störenden dritten Oberwelle in dem ersten unkompensierten Sendesignal Y um 90° zu drehen. Diese Phasendrehung wird deshalb vorgesehen, weil, wie oben beschrieben, die Phasendifferenz zwischen der dritten Oberwelle des unkompensierten Sendesignals Y und dem anderen unkompensierten Sendesignal Z am Ausgang der Modulationseinrichtung bereits schon 90° beträgt. Die zusätzliche Phasendrehung des Anteils der dritten Oberwelle in dem unkompensierten Sendesignal Y durch den ersten Allpass 120 resultiert theoretisch in einer Phasendifferenz von 180° zwischen den dritten Oberwellen des Signals am Ausgang des ersten Allpasses und des anderen unkompensierten Sendesignals Z.

Wie oben beschrieben, bewirkt eine nachfolgende mathematische Verknüpfung der beiden Signale in der Verknüpfungseinrichtung 130 eine Kompensation der dritten Oberwelle in dem resultierenden Signal am Ausgang der Verknüpfungseinrichtung 130.

Bei Verwendung eines nicht-idealen ersten Allpasses 120 ist eine Beschränkung der Phasendrehung allein auf den Störanteil der dritten Oberwelle nicht möglich; vielmehr werden auch andere Anteile des unkompensierten ersten Sendesignals Y in ihrer Phase gedreht. In der Ortskurve gemäß Fig. 2 ist dies für die Grundwelle $f_1$ veranschaulicht, welche gegenüber ihrer Phasenlage am Eingang des ersten Allpasses, repräsentiert durch den Winkel $\alpha_1$, um den Winkel $\alpha_3$ auf $f_1$ gedreht wird. Damit eine derartige Phasendrehung der Grundwelle des Sendesignals, die sich bei Verwendung von realen Allpässen leider nicht vermeiden lässt, keine unerwünschten Konsequenzen in Form einer Kompensation der Grundwelle des Sendesignals am Ausgang der Verknüpfungseinrichtung 130 zur Folge hat, ist eine Korrektur der Phasenlage der Grundwelle des anderen unkompensierten Sendesignal Z erforderlich. Diese Korrektur wird durch den oben beschriebenen Tiefpass 140 gewährleistet.

Anstelle des Tiefpasses kann gemäß einem zweiten Ausführungsbeispiel der Erfindung, wie es in Fig. 3a dargestellt ist, auch ein zweiter Allpass 340 vorgesehen sein. Auch dieser zweite Allpass hat die Aufgabe, die Toleranzen des ersten Allpasses 120 zu kompensieren. Dabei sind mit den Toleranzen insbesondere Widerstands- und Kapazitätstoleranzen des ersten Allpasses gemeint, die eine Änderung der absoluten Lage des Zeigers $f_2$ für die erste Oberwelle auf der Ortskurve verursachen können.

Fig. 3b zeigt eine Ortskurve für den zweiten Allpass 340, welcher geeignet ist, die Toleranzen des ersten Allpasses 120 zu kompensieren, indem er insbesondere die Phasenlage der Grundwelle (Zeiger $f_1$ in Fig. 3b) des anderen unkompensierten Sendesignals an seinem Ausgang mit der Phasenlage der Grundwelle (gestrichelter Zeiger $\alpha_1$ in Fig. 2) des unkompensierten Signals Y(t) am Eingang des ersten Allpasses 120 in Übereinstimmung bringt.

Weiterhin gewährleistet der zweite Allpass, dass der Verstärkungsfaktor, d.h. die Länge der Zeiger bei den Allpässen immer zu 1 normiert ist.

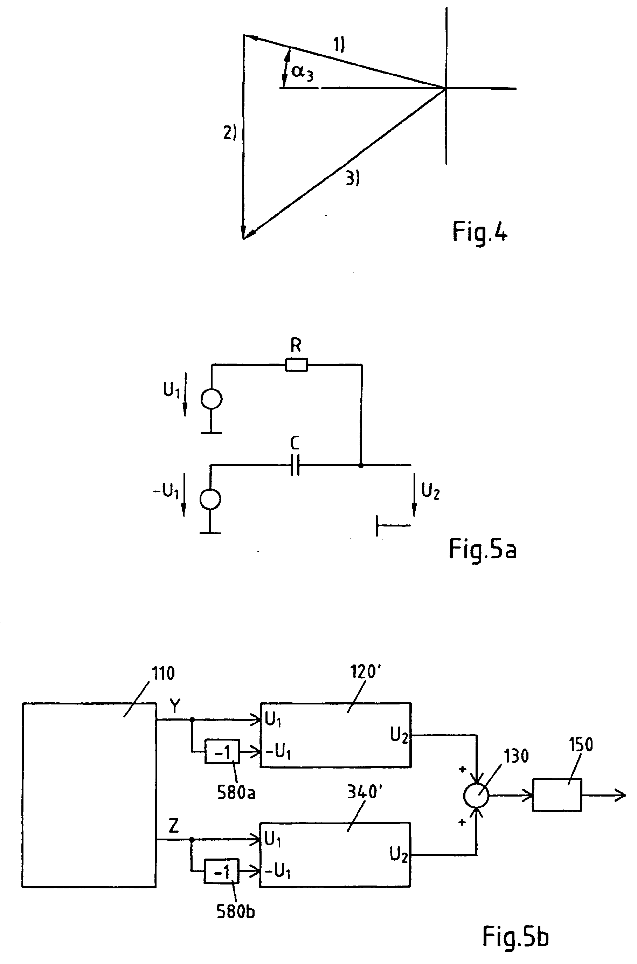

Fig. 4 zeigt eine Zeigerdarstellung der Nutzsignale, d.h. der Grundwellenanteile der Signale am Ausgang der beiden Allpässe 120, 340 sowie am Ausgang der Verknüpfungseinrichtung 130 gemäß dem zweiten Ausführungsbeispiel der Erfindung. Es ist zu erkennen, dass die Grundwelle (s. Zeiger 1) des ersten unkompensierten Sendesignals Y durch die Verwendung des nicht-idealen ersten Allpasses 120 um den Winkel $-\alpha_3$ gegenüber ihrer Phasenlage von 180°am Eingang des ersten Allpasses 120 gedreht wurde. Durch die Verwendung des zweiten Allpasses wird die Phasenlage der Grundwelle des unkompensierten Sendesignals Z gegenüber der Phasenlage (-180°) der Grundwelle des ersten unkompensierten Sendesignals Y am Eingang des Allpasses auf eine Phasendifferenz von 90° stabilisiert (s. Zeiger 2). Es ist in Fig. 4 deutlich zu erkennen, dass solange der Winkel $\alpha_3$ klein bleibt, die Grundwelle des teilkompensierten Sendesignals (s. Zeiger 3) am Ausgang der Verknüpfungseinrichtung 130 im wesentlichen nicht von der Kompensation betroffen wird und deshalb nach wie vor, wie gewünscht, in dem teilkompensierten Sendesignal enthalten ist.

In Fig. 5a ist ein Beispiel für einen bekannten Allpass erster Ordnung gezeigt. Er umfasst einen ersten Zweig bestehend aus einer ersten Spannungsquelle $U_1$ und einem Widerstand R und aus einem zweiten Zweig, bestehend aus einer zu der ersten Spannungsquelle gegenpoligen zweiten Spannungsquelle $-U_1$ und einem Kondensator C. Die beiden Zweige sind in der Weise parallel geschaltet, dass die freien Enden des Widerstandes und des Kondensators, d.h. die Enden, die nicht mit der ersten oder zweiten Spannungsquelle verknüpft sind, zusammengeschaltet sind und den Ausgang des Allpasses, an dem die Ausgangsspannung $U_2$ abgegriffen wird, repräsentieren.

Die Übertragungsfunktion dieses bekannten Allpasses lautet:

$$\frac{U_2(s)}{U_1(s)} = \frac{1 - sRC}{1 + sRC} \qquad\qquad (8)$$

Der Verstärkungsfaktor eines derartigen Allpasses beträgt 1 und die durch ihn verursachte Phasendrehung zwischen $U_2$ und $U_1$ beträgt:

$$\alpha = -2\,\arctan\frac{\omega}{\omega_E}; \qquad \text{mit } \omega_E = \frac{1}{RC} \qquad (9)$$

Bei Verwendung eines nicht-idealen Allpasses variiert die Größe $\omega_E$ aufgrund von Toleranzen des Widerstandes R und des Kondensators C. Dies hat zur Folge, dass die durch den Allpass bewirkte Phasendrehung ebenfalls einer Schwankung $\Delta\alpha$ unterliegt, die sich wie folgt berechnet:

$$\Delta\alpha = 2\,\arctan\frac{\omega}{\omega_{E\,\min}} - 2\,\arctan\frac{\omega}{\omega_{E\,\max}}; \qquad \text{berechnet für } \omega = 2\pi f_2 \qquad (10)$$

Fig. 5b zeigt die Verwendung von Allpässen gemäß Fig. 5a für einen Sender gemäß dem zweiten Ausführungsbeispiel der Erfindung. Bei der Verwendung dieser Allpässe ist es gemäß Fig. 5b erforderlich, die unkompensierten Sendesignale Y, Z jeweils auch in invertierter Form für die zweiten Eingänge $-U_1$ des ersten und des zweiten Allpasses bereitzustellen. Dies wird mit Hilfe der Invertierer 580a und 580b realisiert.

**Patentansprüche**

1. Sender zum Erzeugen eines Sendesignals mit: einer Modulationseinrichtung (110) zum Erzeugen von mindestens zwei unkompensierten Sendesignalen Y, Z jeweils durch Modulieren von einem Basisbandsignal mit einem Oszillationssignal, wobei jedes der beiden unkompensierten Sendesignale Y, Z mindestens einen Störanteil aufweist und die Störanteile in den beiden unkompensierten Sendesignalen um einen bestimmten Betrag gegeneinander phasenverschoben sind, **gekennzeichnet durch** einen Allpass (120), welcher der Modulationseinrichtung (110) nachgeschaltet ist zum Erzeugen des Ausgangssignals durch Drehen der Phase des mindestens einen Störanteils in einem der beiden unkompensierten Signale so, dass der Betrag der Phasendifferenz zwischen den Störanteilen in den beiden unkompensierten Sendesignalen nach der Phasendrehung 0° oder 180° beträgt und eine Verknüpfungseinrichtung (130) zum Erzeugen eines zumindest teilkompensierten Sendesignals **durch** Addieren des Ausgangssignals des Allpasses (120) mit dem anderen unkompensierten Sendesignal, wenn ihre jeweiligen Störanteile gegenphasig sind, und **durch** Subtrahieren der beiden unkompensierten Sendesignale voneinander, wenn ihre jeweiligen Störanteile phasengleich sind, so dass ein zumindest teilkompensiertes Sendesignal entsteht.

2. Sender nach Anspruch 1, **dadurch gekennzeichnet, dass** die mindestens einen Störanteile in den beiden unkompensierten Sendesignalen jeweils deren dritten Oberwellen entsprechen.

3. Sender nach Anspruch 1 oder 2, **gekennzeichnet durch** einen ersten Tiefpass (140) zum Filtern des anderen unkompensierten Sendesignals, bevor dieses der Verknüpfungseinrichtung (130) zugeführt wird.

4. Sender nach Anspruch 1 oder 2, **gekennzeichnet durch** einen weiteren Allpass (340) zum Filtern des anderen unkompensierten Sendesignals, bevor dieses der Verknüpfungseinrichtung (130) zugeführt wird.

5. Sender nach einem der Ansprüche 1 bis 4, **dadurch gekennzeichnet, dass** der Sender einen zweiten Tiefpass (150) zum Filtern des zumindest teilkompensierten Sendesignals am Ausgang der Verknüpfungseinrichtung (130) aufweist.

6. Sender nach Anspruch 5, **dadurch gekennzeichnet, dass** der Sender zusammen mit dem zweiten Tiefpassfilter (150) auf einem Chip integrierbar ist.

7. Sender nach einem der Ansprüche 1 bis 6, **dadurch gekennzeichnet, dass** die Modulationseinrichtung (110) einen ersten Quadraturmodulator (112) mit einem ersten und zweiten Modulator (112a, 112b) aufweist zum Bilden eines ersten der beiden unkompensierten Sendesignale durch Verknüpfen der Ausgänge des ersten und des zweiten Modulators (112a, 112b), wobei der erste Modulator (112a) ein erstes Basisbandsignal Q mit einem ersten Oszillationssignal $X_{L0Q}$ moduliert und wobei der zweite Modulator (112b) ein zweites Basisbandsignal I mit einem zweiten Oszillationssignal $X_{L0I}$ moduliert.

8. Sender nach Anspruch 7, **dadurch gekennzeichnet, dass** die Modulationseinrichtung (110) einen zweiten Quadraturmodulator (114) mit einem dritten und vierten Modulator (114a, 114b) aufweist zum Bilden eines zweiten der beiden unkompensierten Sendesignale durch Verknüpfen der Ausgänge des dritten Modulators (114a) und des vierten Modulators (114b), wobei der dritte Modulator (114a) das zweite Basisbandsignal I mit dem ersten Oszillationssignal $X_{L0Q}$ moduliert und wobei der vierte Modulator (114b) das erste Basisbandsignal Q mit dem zweiten Oszillationssignal $X_{L0I}$ moduliert.

9. Verfahren zum Erzeugen eines Sendesignals mit folgenden Schritten: Erzeugen von mindestens zwei unkompensierten Sendesignalen mit jeweils mindestens einem Störanteil, wobei die jeweiligen Störanteile in den beiden Sendesignalen um einen bestimmten Betrag gegeneinander phasenverschoben sind, **gekennzeichnet durch** Drehen der Phase des mindestens einen Störanteils in einem der beiden unkompensierten Sendesignale Y, Z so, dass der Betrag der Phasendifferenz zwischen den Störanteilen in den beiden unkompensierten Sendesignalen nach der Phasendrehung 0° oder 180° beträgt; und Addieren des phasengedrehten unkompensierten Sendesignals mit dem anderen unkompensierten Sendesignal, wenn ihre jeweiligen Störanteile gegenphasig sind, und Subtrahieren der beiden unkompensierten Sendesignale voneinander, wenn ihre jeweiligen Störanteile phasengleich sind, so dass ein zumindest teilkompensiertes Sendesignal entsteht.

**Claims**

1. A transmitter for generating a transmission signal, which transmitter includes: a modulation device (110) for generating at least two uncompensated transmission signals Y, Z by modulation of a baseband signal with a respective oscillation signal, each of said two uncompensated transmission signals Y, Z comprising at least one interference component and the interference components in the two uncompensated transmission signals being phase shifted relative to one another by a given amount, **characterized in that** the transmitter includes an all-pass filter (120) which is connected downstream of the modulation device (110) in order to generate an output signal by shifting the phase of the at least one interference component in one of the two uncompensated transmission signals in such a manner that the amount of the phase difference between the interference components in the two uncompensated transmission signals after the phase shift is 0° or 180°, and also includes a combination device (130) for generating an at least partly compensated transmission signal by addition of the output signal of the all-pass filter (120) and the other uncompensated transmission signal when their respective interference components are brought in an antiphase relation, and by subtraction of the two uncompensated transmission signals from each other when their respective interference components show the same phase, so that an at least partly compensated transmission signal evolves.

2. A transmitter as claimed in claim 1, **characterized in that** the respective interference components in the two uncompensated transmission signals correspond to their third harmonic.

3. A transmitter as claimed in claim 1 or 2, **characterized in that** it includes a first low-pass (140) for filtering the other uncompensated transmission signal before it is applied to the combination device (130).

4. A transmitter as claimed in claim 1 or 2, **characterized in that** it includes a further all-pass filter (340) for filtering the other uncompensated transmission signal before it is applied to the combination device (130).

5. A transmitter as claimed in any one of the claims 1 to 4, **characterized in that** the transmitter includes a second low-pass (150) for filtering the at least partly compensated transmission signal at the output of the combination device (130).

6. A transmitter as claimed in claim 5, **characterized in that** the transmitter can be integrated on a chip together with the second low-pass filter (150).

7. A transmitter as claimed in any one of the claims 1 to 6, **characterized in that** the modulation device (110) includes a first quadrature modulator (112) with a first and a second modulator (112a, 112b) for forming a first one of the two uncompensated transmission signals by combining the outputs of the first and the second modulator (112a, 112b), the first modulator (112a) modulating a first baseband signal Q with a first oscillation signal $X_{OQ}$ and the second modulator (112b) modulating a second baseband signal I with a second oscillation signal $X_{LOI}$.

8. A transmitter as claimed in one of the claims 1 to 7, **characterized in that** the modulation device (110) includes a second quadrature modulator (114) with a third and a fourth modulator (114a, 114b) for forming a second one of the two uncompensated transmission signals by combining the outputs of the third modulator (114a) and the fourth modulator (114b), the third modulator (114a) modulating the second baseband signal I with the first oscillation signal $X_{LOQ}$ and the fourth modulator (114b) modulating the first baseband signal Q with the second oscillation signal $X_{LOQ}$.

9. A method of generating a transmission signal, which method includes the following steps: generating at least two uncompensated transmission signals, each of which includes at least one interference component, the respective interference components in the two transmission signals being phase shifted by a given amount relative to one another, **characterized in that** the phase is shifted of the at least one interference component in one of the two uncompensated transmission signals Y, Z in such a manner that the amount of the phase difference between the interference components in the two uncompensated transmission signals amounts to 0° or 180° after the phase shift, and **in that** the phase-shifted uncompensated transmission signal and the other uncompensated transmission signal are added together when their respective interference components are of opposite phase, whereas the two uncompensated transmission signals are subtracted from one another when their respective interference components are of the same phase, thus yielding an at least partly compensated transmission signal.

**Revendications**

1. Émetteur pour la production d'un signal d'émission avec: un dispositif de modulation (110) pour la production d'au moins deux signaux d'émission non compensés Y, Z, chacun par modulation d'un signal de bande de base par un signal d'oscillation, dans lequel chacun des deux signaux d'émission non compensés Y, Z comporte au moins une partie perturbatrice et les parties perturbatrices dans les deux signaux d'émission non compensés sont décalées en phase d'une certaine valeur l'une de l'autre, **caractérisé par** un filtre passe-tout (120), lequel est monté en aval du dispositif de modulation (110) pour la production du signal de sortie par rotation de la phase de l'au moins une partie perturbatrice dans un des deux signaux non compensés, de telle sorte qu'après la rotation de phase, la valeur de la différence de phase entre les parties perturbatrices dans les deux signaux d'émission non compensés est de 0° ou 180°, et un dispositif de couplage (130) pour la production d'un signal d'émission au moins partiellement compensé par l'addition du signal de sortie du passe-tout (120) avec l'autre signal d'émission non compensé, quand leurs parties perturbatrices respectives sont en opposition de phase, et par la soustraction des deux signaux d'émission non compensés l'un de l'autre quand leurs parties perturbatrices respectives sont en phase, de telle sorte qu'un signal d'émission au moins partiellement compensé est produit.

2. Émetteur selon la revendication 1, **caractérisé en ce que** les au moins une parties perturbatrices dans les deux signaux d'émission non compensés correspondent respectivement à leurs troisièmes harmoniques.

3. Émetteur selon la revendication 1 ou 2, **caractérisé par** un premier filtre passe-bas (140) pour le filtrage de l'autre signal d'émission non compensé avant que celui-ci ne soit acheminé au dispositif d'enchaînement (130).

4. Émetteur selon la revendication 1 ou 2, **caractérisé par** un autre filtre passe-tout (340) pour le filtrage de l'autre signal d'émission non compensé avant que celui-ci ne soit acheminé au dispositif de couplage (130).

5. Émetteur selon l'une quelconque des revendications 1 à 4, **caractérisé en ce que** l'émetteur comporte un deuxième filtre passe-bas (150) pour le filtrage du signal d'émission au moins partiellement compensé à la sortie du dispositif de couplage (130).

6. Émetteur selon la revendication 5, **caractérisé en ce que** l'émetteur peut être intégré sur une puce, ensemble avec le deuxième filtre passe-bas (150).

7. Émetteur selon l'une quelconque des revendications 1 à 6, **caractérisé en ce que** le dispositif de modulation (110) comporte un premier modulateur de déphasage en quadrature (112) avec un premier et deuxième modulateur (112a, 112b) pour la formation d'un premier des deux signaux d'émission non compensés par couplage des sorties du premier et du deuxième modulateur (112a, 112b), sachant que le premier modulateur (112a) module un premier signal en bande de base Q avec un premier signal d'oscillation $X_{L0Q}$ et sachant que le deuxième modulateur (112b) module un deuxième signal en bande de base I avec un deuxième signal d'oscillation $X_{L0I}$.

8. Émetteur selon la revendication 7, **caractérisé en ce que** le dispositif de modulation (110) comporte un deuxième modulateur de déphasage en quadrature (114) avec un troisième et quatrième modulateur (114a, 144b) pour la formation d'un deuxième des deux signaux d'émission non compensés par couplage des sorties du troisième modulateur (114a) et du quatrième modulateur (114b), sachant que le troisième modulateur (114a) module le deuxième signal en bande de base I avec le premier signal d'oscillation $X_{L0Q}$ et sachant que le quatrième modulateur (114b) module le premier signal en bande de base Q avec le deuxième signal d'oscillation $X_{L0I}$.

9. Procédé pour la production d'un signal d'émission avec les étapes suivantes : production d'au moins deux signaux d'émission non compensés, avec respectivement au moins une partie perturbatrice, dans lequel les parties perturbatrices respectives sont décalées en phase l'une de l'autre d'une certaine valeur dans les deux signaux d'émission, **caractérisé par** la rotation de la phase de l'au moins une partie perturbatrice dans l'un des deux signaux d'émission non compensés Y, Z, de telle sorte qu'après la rotation de phase, la valeur de la différence de phase entre les parties perturbatrices dans les deux signaux d'émission non compensés soit de 0° ou de 180° ; et addition du signal d'émission non compensé ayant subi la rotation de phase avec l'autre signal d'émission non compensé quand leurs parties perturbatrices respectives sont en opposition de phase, et soustraction des deux signaux d'émission non compensés l'un de l'autre quand leurs parties perturbatrices respectives sont en phase, de telle sorte qu'un signal d'émission au moins partiellement compensé est produit.

Fig.1a

Fig.1b

Fig.2

$f_1: \alpha_1 + \alpha_3$

$f_2: \alpha_2 + 90°$

Fig.3a

$f_1: \alpha_1$

$f_2: \alpha_2$

Fig.3b

Fig.4

Fig.5a

Fig.5b

13

Fig.6

$Q = A\sin\varphi(t)$

$\varphi(t)$

$I = A\cos\varphi(t)$

Fig.7

$X_{LOI}$

t

$X_{LOQ}$

t

Fig.8

$X_{LOQ}$

I

+

Z(t)

+

Q

$X_{LOI}$

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP P6120990 A
- EP 0305164 A
- US 5861781 A